(19) Europäisches Patentamt

European Patent Office

Office européen des brevets

(11) Veröffentlichungsnummer : **0 424 745 B1**

(12) **EUROPÄISCHE PATENTSCHRIFT**

(45) Veröffentlichungstag der Patentschrift :
**02.02.94 Patentblatt 94/05**

(21) Anmeldenummer : **90119552.9**

(22) Anmeldetag : **12.10.90**

(51) Int. Cl.$^5$ : **C08G 18/68,** C08K 3/24,
C09D 175/14

(54) **Verfahren zur Herstellung von ungesättigten, urethanisierten Polyesterharzen, die nach diesem Verfahren erhältlichen Polyesterharze und ihre Verwendung als oder zur Herstellung von Beschichtungsmittel(n).**

Die Akte enthält technische Angaben, die nach dem Eingang der Anmeldung eingereicht wurden und die nicht in dieser Patentschrift enthalten sind.

(30) Priorität : **25.10.89 DE 3935495**

(43) Veröffentlichungstag der Anmeldung :
**02.05.91 Patentblatt 91/18**

(45) Bekanntmachung des Hinweises auf die Patenterteilung :
**02.02.94 Patentblatt 94/05**

(84) Benannte Vertragsstaaten :
**AT BE CH DE ES FR GB GR IT LI NL SE**

(56) Entgegenhaltungen :
**EP-A- 0 021 078**
**EP-A- 0 315 920**
**EP-A- 0 318 800**
**GB-A- 2 164 345**
**US-A- 3 703 498**

(73) Patentinhaber : **BAYER AG**
**D-51368 Leverkusen (DE)**

(72) Erfinder : **Meixner, Jürgen, Dr.**
**Josef-Brocker-Dyk 56**
**W-4150 Krefeld (DE)**
Erfinder : **Kremer, Wolfgang**
**Lilienweg 6**
**W-4173 Kerken 2 (DE)**
Erfinder : **Müller, Manfred**
**Friedrich-Gelsamstrasse 34**
**W-5140 Erkelenz (DE)**

EP 0 424 745 B1

## Beschreibung

Die Erfindung betrifft ein Verfahren zur Herstellung von neuen, ungesättigten, urethanisierten Polyesterharzen auf Basis von ausgewählten Ausgangsmaterialien, die nach diesem Verfahren erhältlichen Polyesterharze und die Verwendung dieser Polyesterharze als oder zur Herstellung von unter dem Einfluß von Radikalen aushärtbare(n) Beschichtungsmittel(n) insbesondere für Holz oder holzähnliche Materialien.

Ungesättigte Polyesterharze als Bindemittel für Beschichtungsmittel sind seit langem bekannt. Ihre Aushärtung erfolgt durch einen Radikalkettenmechanismus. Gestartet wird dieser Mechanismus entweder durch Redoxsysteme wie Metallsalze und Hydroperoxide oder durch UV-Bestrahlung in Anwesenheit eines Fotoinitiators. Da die Beschichtungen vorzugsweise auf Holz und holzähnlichen Stoffen verwendet werden, sind nur Härtungstemperaturen von Raumtemperatur bis maximal 80°C üblich. Bei diesen Temperaturen liegen die Aushärtezeiten über denen anderer Lackfilmbindemittel. So sind z.B. Beschichtungen, die rein physikalisch (durch Abdunsten des Lösungsmittels) trocknen, wesentlich schneller ausgehärtet als auf Basis ungesättigter Polyesterharze.

Das Eigenschaftsniveau der Lackfilme, die mit Hilfe von ungesättigten Polyesterharzen als Bindemittel hergestellt werden, wird jedoch von diesen schneller trocknenden Beschichtungen nicht erreicht.

Es sind bereits viele Versuche unternommen worden, die ungesättigten Polyesterharze so zu modifizieren, daß höhere Aushärtegeschwindigkeiten erreicht werden. So wurden, wie z.B. in der DE-OS 2 360 366, DE-OS 1 520 695 oder GB-A-2 164 345 beschrieben, ungesättigte Polyesterharze mit Isocyanaten umgesetzt. Durch die Umsetzung entstehen höherviskose Produkte mit verbesserten, aber noch nicht ausreichenden Aushärtungszeiten.

Spezielle polycyclische Alkohole sind imstande, als Veresterungskomponente in ungesättigten Polyesterharzen diesen eine klebfreie Lackfilmoberfläche nach der Aushärtung trotz anwesenden Luftsauerstoffs zu vermitteln (s. Wagner-Sarx: "Lackkunstharze", Carl Hanser Verlag, München, 1971, S. 138). Allerdings zeigen die Lackfilme meist ungenügende Härte und sind zudem nicht beständig gegen Lösungsmittel.

Es war daher die der Erfindung zugrundeliegende Aufgabe, neue Polyesterharze zur Verfügung zu stellen, die nicht mit den genannten Nachteilen behaftet sind, d.h. die zur Herstellung radikalisch aushärtbarer Beschichtungsmitteln geeignet sind, die sowohl unter UV-Bestrahlung als auch mit Hilfe von Peroxiden schnell aushärten und Lackfilme mit harten, wasser- und chemikalienfesten Oberflächen ergeben.

Überraschenderweise konnte diese Aufgabe durch die Bereitstellung des nachstehend näher beschriebenen erfindungsgemäßen Verfahrens gelöst werden. Bei diesem Verfahren werden ausgewählte, olefinisch ungesättigte Polyesterharze A) mit ausgewählten Lackpolyisocyanaten B) unter Einhaltung bestimmter Mengenverhältnisse zur Reaktion gebracht.

Gegenstand der Erfindung ist ein Verfahren zur Herstellung von olefinisch ungesättigten, Urethangruppen aufweisenden Polyesterharzen durch Umsetzung von

A) olefinisch ungesättigten, alkoholische Hydroxylgruppen aufweisenden Polyesterharzen mit
B) organischen Polyisocyanaten,
dadurch gekennzeichnet, daß man

i) als ungesättigte Polyesterharze A) solche verwendet, die eine Säurezahl von 0 bis 50, eine Hydroxylzahl von 30 bis 120 und ein Molekulargewicht Mn von 800 bis 10 000 aufweisen, und die durch Umsetzung von

a) insgesamt 0,9 x bis 1,0 x Mol Maleinsäure, Maleinsäureanhydrid und/oder Fumarsäure,
b) 0 bis 0,1 x Mol einer Säure- bzw. Säureanhydrid-Komponente, bestehend aus mindestens einer aromatischen Dicarbonsäure mit 8 Kohlenstoffatomen, gesättigten aliphatischen Dicarbonsäuren mit 4 bis 10 Kohlenstoffatomen, gesättigten oder olefinisch ungesättigten cycloaliphatischen Dicarbonsäuren mit 6 bis 10 Kohlenstoffatomen und/oder mindestens einem Anhydrid einer derartigen Dicarbonsäure,
c) 0,1 x bis 0,5 x Mol einer cycloaliphatischen Diolkomponente, bestehend aus mindestens einem zweiwertigen cycloaliphatischen, gesättigten Alkohol mit 6 bis 18 Kohlenstoffatomen,
d) 0,5 bis 0,9 x Mol einer aliphatischen Diolkomponente, bestehend aus mindestens einem zweiwertigen aliphatischen gesättigten Alkohol mit 2 bis 6 Kohlenstoffatomen und
e) 0,1 bis 0,5 x Mol mindestens eines $\beta,\gamma$-ethylenisch ungesättigten Etheralkohols mit 5 bis 14 Kohlenstoffatomen,

hergestellt worden sind, wobei die Summe der Anzahl der Mole der Komponenten a) und b) 1,0 x und die Summe der Anzahl der Mole der Komponenten c), d) und e) 1,1 x bis 1,5 x beträgt und wobei x für eine beliebige positive Zahl steht,
ii) als organische Polyisocyanate Lackpolyisocyanate mit einem Gehalt an (cyclo)aliphatisch gebundenen Isocyanatgruppen von 8 - 30 Gew.-%, ausgewählt aus der Gruppe bestehend aus (i) Isocyanuratgruppen aufweisenden Polyisocyanaten auf Basis von 1,6-Diisocyanatohexan, 1-Isocyanato-3,3,5-trimethyl-5-isocyanatomethyl-cyclohexan oder Gemischen dieser beiden Diisocyanate und (ii) Uretdion- und Isocyanuratgruppen aufweisenden Polyisocyanatgemischen auf Basis von 1,6-Diisocyanatohexan mit einem Molverhältnis von chemisch eingebauten Isocyanuratgruppen zu chemisch eingebauten Uretdiongruppen von 4 : 1 bis 1 : 4 verwendet, und

iii) man die Komponenten A) und B) unter Einhaltung eines NCO/OH-Äquivalentverhältnisses von 0,1:1 bis 1:1 miteinander zur Reaktion bringt, wobei Art und Mengenverhältnisse der Reaktionspartner im Rahmen der gemachten Angaben im übrigen so gewählt werden, daß die resultierenden, urethanisierten Polyesterharze einen Urethangruppengehalt von mindestens 0,025 Mol pro 100 g aufweisen.

Gegenstand der Erfindung sind auch die nach diesem Verfahren erhältlichen, olefinisch ungesättigten, Urethangruppen aufweisenden Polyesterharze.

Gegenstand der Erfindung ist auch die Verwendung der so hergestellten ungesättigten, urethanisierten Polyesterharze als oder zur Herstellung von unter dem Einfluß von Radikalen aushärtbare(n) Beschichtungsmittel(n).

Die beim erfindungsgemäßen Verfahren einzusetzenden ungesättigten, urethanisierten Polyesterharze weisen einen Urethangruppengehalt von mindestens 0,025, vorzugsweise von 0,03 bis 0,1 und besonders bevorzugt von 0,04 bis 0,08 Mol Urethangruppen pro 100 g Feststoff auf. Ein über 0,1 Mol pro 100 g Feststoff liegender Urethangruppengehalt ist insbesondere dann denkbar, wenn als Polyisocyanate B) bereits Urethangruppen aufweisende Polyisocyanate eingesetzt werden, so daß sich der Gesamtgehalt der urethanisierten Polyesterharze an Urethangruppen aus den über das Polyisocyanat B) eingeführten Urethangruppen und den durch Reaktion der Isocyanatgruppen mit Hydroxylgruppen bei der erfindungsgemäßen Umsetzung gebildeten Urethangruppen zusammensetzt.

Die ungesättigten Polyesterharze A) weisen eine Säurezahl von 0 bis 50, vorzugsweise 5 bis 40, eine Hydroxylzahl von 30 bis 120, vorzugsweise 40 bis 100 und ein nach der Methode der Gelpermeationschromatographie unter Verwendung von Polystyrol als Standard ermittelbares, als Zahlenmittel bestimmtes Molekulargewicht Mn von 800 bis 10 000, vorzugsweise 1000 bis 5000, auf.

Bei der Herstellung der ungesättigten Polyesterharze A) werden vorzugsweise 1 x Mol der Komponente a) mit 0 Mol der Komponente b), 0,15 x bis 0,45 x Mol der Komponente c), 0,6 x bis 0,85 x Mol der Komponente d) und 0,2 x bis 0,45 x Mol der Komponente e) umgesetzt, wobei die Summe der Anzahl der Mole der Komponente c), d) und e) vorzugsweise 1,1 x bis 1,5 x beträgt, und wobei x hier und auch vorstehend für eine beliebige positive Zahl steht und lediglich zum Ausdruck bringen soll, daß nicht nur die zahlenmäßig angegebenen Molmengen der einzelnen Reaktionspartner sondern auch beliebige Vielfache davon miteinander zur Reaktion gebracht werden können.

Als Komponente a) eignen sich Maleinsäure, Maleinsäureanhydrid und Fumarsäure. Bevozugt ist Fumarsäure.

Beispiele für Aufbaukomponenten b) sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder dessen Anhydrid, sowie Adipinsäure.

Beispiele für Aufbaukomponenten c) sind 1,4-Bis-hydroxymethyl-cyclohexan, 2,2-Bis-(4-hydroxycyclohexyl)-propan, 2-Methyl-2,4-bis-(4-hydroxycyclohexyl)-pentan und Bis-hydroxymethyl-tricyclodecan. Bevorzugt ist 2,2-Bis-(4-hydroxycyclohexyl)-propan.

Als Aufbaukomponenten d) eignen sich vorzugsweise zweiwertige Alkohole mit 2 bis 6 Kohlenstoffatomen wie beispielsweise Ethylenglykol, Propandiol-1,2, Propandiol-1,3, Diethylenglykol, Butandiol-1,3, Butandiol-1,4, Neopentylglykol oder Hexandiol-1,6. Bevorzugt verwendet werden Ethylenglykol und Propandiol-1,2.

Die β,γ-ethylenisch ungesättigten Etheralkohole e) enthalten neben mindestens einer veresterungsfähigen Hydroxylgruppe noch mindestens einen, vorzugsweise mindestens zwei, β,γ-ethylenisch ungesättigten Esterrest der Formel

$$C = C - C - O - .$$

Beispiele hierfür sind Glycerindiallylether, Trimethylolpropandiallylether und Pentaerythrittriallylether. Bevorzugt ist Trimethylolpropandiallylether.

Die Herstellung der ungesättigten Allylethergruppen enthaltenden Polyester erfolgt nach bekannten Methoden, z.B. durch Schmelz- oder Azeotropveresterung der Alkohole und Säuren oder deren veresterungsfähigen Derivate, vgl. "Methoden der organischen Chemie" (Houben-Weyl), 4. Auflage, Bd. 1412, Georg Thieme Verlag, Stuttgart 1961, S. 1 bis 5, 21 bis 33, 40 bis 44.

Die Polyisocyanatkomponente B) besteht aus mindestens einem Lackpolyisocyanat mit einem Gehalt an (cyclo)aliphatisch gebundenen Isocyanatgruppen von 8 bis 30, vorzugsweise 12 bis 25 Gew.-% der bereits oben genannten Art. Die Herstellung der Uretdion- und Isocyanuratgruppen aufweisenden Polyisocyanatgemische auf Basis von 1,6-Diisocyanatohexan geschieht in an sich bekannter Weise durch Oligomerisierung von HDI unter Verwendung von tert. Phosphinen als Katalysatoren.

3

Bei der Durchführung des erfindungsgemäßen Verfahrens durch Umsetzung der Ausgangskomponenten A) und B) werden diese in solchen Mengenverhältnissen zur Reaktion gebracht, die einem NCO/OH-Äquivalentverhältnis von 0,1:1 bis 1:1, vorzugsweise 0,2:1 bis 0,8:1 entsprechen. Im übrigen werden Art und Mengenverhältnisse der Reaktionspartner im Rahmen der gemachten Angaben so gewählt, daß der obengenannte Gehalt der Umsetzungsprodukte an chemisch eingebauten Urethangruppen resultiert.

Die erfindungsgemäße Umsetzung der Komponenten A) und B) erfolgt im allgemeinen in Gegenwart von inerten Lösungsmitteln wie z.B. Ethylacetat, Butylacetat und/oder Toluol oder in Gegenwart von copolymerisierbaren Monomeren wie z.B. niedermolekularen Acrylsäureestern und/oder Styrol, wobei diese Lösungsmittel bzw. copolymerisierbare Monomere in Mengen von 10 bis 70 Gew.-%, vorzugsweise 20 bis 60 Gew.-%, bezogen auf das Gesamtgewicht des Reaktionsansatzes inklusive Lösungsmittel, zum Einsatz gelangen können.

Die Umsetzung erfolgt im allgemeinen innerhalb des Temperaturbereichs von 40 bis 100, vorzugsweise 50 bis 80°C, wobei jedoch darauf zu achten ist, daß unerwünschte thermisch induzierte Polymerisationsreaktionen unterbleiben. Es ist zweckmäßig, bei relativ niedrigen Temperaturen innerhalb der genannten Temperaturbereiche das organische Polyisocyanat B) nur langsam zum ungesättigten Polyester A) zuzugeben und unter Verwendung von bekannten, die Isocyanat-Additionsreatkion beschleunigenden Katalysatoren, zu arbeiten. Geeignete Katalysatoren sind beispielsweise Alkalimetallalkoholate wie Natriumethylat, tertiäre Amine wie Triethylamin, Diethylentriamin oder Dimethylbenzylamin oder beispielsweise bekannte Zinn-Katalysatoren wie Zinndioctoat oder Dibutylzinndilaurat.

Um die urethanisierten Polyesterharze vor unerwünschter vorzeitiger Polymerisation zu bewahren, ist es oft empfehlenswert, bereits bei ihrer Herstellung 0,001 bis 0,1 Gew.-%, bezogen auf das Gewicht der Ausgangsmaterialien zur Herstellung der urethanisierten Polyesterharze, an bekannten Polymerisationsinhibitoren oder Antioxidantien wie z.B. die für diesen Zweck üblicherweise eingesetzten Chinone, Hydrochinone, Kupferverbindungen, Phosphite, Amine oder Phenole mitzuverwenden.

Die erfindungsgemäßen Verfahrensprodukte können als solche oder in Kombination mit den aus der Lacktechnologie bekannten Hilfs- und Zusatzmitteln der erfindungsgemäßen Verwendung zugeführt werden. Dies bedeutet, sie können ohne weitere Zusätze direkt als Beschichtungsmittel verwendet werden. Im allgemeinen werden sie jedoch in Kombination mit den aus der Lacktechnologie bekannten Hilfs- und Zusatzmitteln wie beispielsweise Füllstoffen, Pigmenten, Lösungsmitteln, Verlaufhilfsmitteln u. dgl. bei der Herstellung von Beschichtungsmitteln verwendet. Diese, die erfindungsgemäßen Verfahrensprodukte als Bindemittel enthaltende Beschichtungsmittel eignen sich zur Beschichtung von beliebigen Substraten, insbesondere jedoch zur Beschichtung von Holz, Papier, Kunststoffolien oder Kartonagen. Die Verarbeitung kann nach allen aus der Lacktechnologie üblichen Methoden wie Gießen, Spritzen oder Walzen erfolgen.

Nach Verdunsten von gegebenenfalls mitzuverwendenden inerten Lösungsmitteln kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro-)Peroxiden bei Temperaturen zwischen Raumtemperatur und 150°C erfolgen.

Im Falle der Vernetzung mittels UV-Bestrahlung ist es notwendig, der Überzugsmasse Fotoinitiatoren hinzuzufügen.

Als Fotoinitiatoren sind die üblicherweise eingesetzten Verbindungen geeignet, wie sie z.B. in der Monographie von J. Korsar, "Light-Sensitive-Systeme", J. Wiley & Sons, New York - London - Sydney 19765, beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-methyl-1-phenyl-propan-1-on.

Die erwähnten Fotoinitiatoren, die je nach Verwendungszweck der erfindungsgemäßen Massen in Mengen zwischen 0,1 und 5 Gew.-%, bezogen auf polymerisierbare Komponenten, eingesetzt werden, können als einzelne Substanz oder, wegen häufiger vorteilhafter synergistischer Effekte, auch in Kombination miteinander verwendet werden.

Im Falle der Vernetzung der mit den Beschichtungsmitteln hergestellten Überzüge mittels Peroxiden müssen den Beschichtungsmitteln an sich bekannte Sikkative einverleibt werden. Geeignete Sikkative sind beispielsweise Kobalt- oder Vanadiumsalze von Säuren wie Leinölfettsäuren, Tallölfettsäuren, Sojaölfettsäuren, von Harzsäuren wie Abietinsäure und Naphthensäure oder von Essigsäure und Isooctansäure oder von anorganischen Säuren wie Salzsäure und Schwefelsäure. Besonders gut geeignet sind in den Beschichtungsmitteln lösliche, als Sikkative wirkende Vanadiumverbindungen. Hierzu gehören Salze der beispielhaft genannten Säuren oder auch Handelsprodukte wie beispielsweise der von der Firma Akzo vertriebene "Vanadiumbeschleuniger VN-2". Die Sikkative werden im allgemeinen in Form von organischen Lösungen in solchen Mengen eingesetzt, daß der Metallgehalt, bezogen auf Bindemittel (erfindungsgemäßes urethanisiertes olefinisch ungesättigtes Polyesterharz) bei 0,0005 bis 1,0, vorzugsweise 0,001 bis 0,5 Gew.-%, liegt.

Als (Hydro)-Peroxide seien beispielhaft genannt: Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peroxidicarbonat, tert.-Butylhydroperoxid, Cumolhydroperoxid, 2,5-Dimethylhexan-2,5-hydroperoxid und Diisopropylbenzolmonohydroperoxid. Vorzugsweise werden diese (Hydro)-Peroxide in Mengen von 1 bis 10 Gew.-%, bezogen auf urethanisiertes Polyesterharz, eingesetzt.

In den nachfolgenden Beispielen beziehen sich alle Angaben in % auf Gewichtsprozente.

Beispiele

Ungesättigte, Allylethergruppen enthaltende Polyester A

Die Herstellung der ungesättigten, Allylethergruppen enthaltenden Polyester $A_1$ bis $A_3$ (s. Tabelle 1) erfolgte nach Zusatz von 0,02 % Toluylhydrochinon durch Schmelzkondensation unter Stickstoffatmosphäre bei einer Temperatur von 150 bis 180°C.

Nach Beendigung der Reaktion wurden die erhaltenen Produkte bei 60°C in Butylacetat gelöst (Menge Butylacetat siehe Tabelle 2).

## Tabelle 1 (ungesättigte Polyester)

| Zusammensetzung (Mol) | Polyester | | |
|---|---|---|---|
| | $A_1$ | $A_2$ | $A_3$ |
| Fumarsäure | 1,0 | 1,0 | 1,0 |
| Ethylenglykol | 0,73 | 0,73 | 0,73 |
| 2,2-Bis(4-hydroxycyclohexyl)propan | 0,3 | - | - |
| Bis-hydroxymethyl-tricyclodecan | - | 0,3 | - |
| 2fach ethoxyliertes 2,2-Bis-(4-hydroxyphenyl)-propan | - | - | 0,3 |
| Trimethylolpropandiallylether | 0,35 | 0,35 | 0,35 |
| Säurezahl (mg KOH/g Substanz) | 20 | 15 | 20 |

Nachstehend werden als Polyisocyanat B folgende Verbindungen verwendet:

Polyisocyanat $B_1$:

70 %ige Lösung in einem Gemisch aus gleichen Gewichtsteilen eines aromatischen Lösungsmittels (®-Solvesso 100) und Methoxypropylacetat eines Isocyanuratgruppen aufweisenden Polyisocyanats auf Basis von IPDI. NCO-Gehalt der Lösung: 11,5 Gew.-%.

Polyisocyanat $B_2$:

Uretdion- und Isocyanuratgruppen aufweisendes Oligomerisierungsprodukt von HDI, hergestellt durch Oligomerisierung von HDI mittels Tributylphosphin als Katalysator, Molverhältnis Uretdion:Isocyanurat = 2:1, NCO-Gehalt = 22 Gew.-%.

Erfindungsgemäßes Verfahren

Zur Herstellung der urethanisierten Polyesterharze der Beispiele 1 bis 3 sowie der Vergleichsbeispiele 4 und 5 werden die in der Tabelle 2 angegebenen Mengen an Polyester A, gelöst in Butylacetat, vorgelegt und mit jeweils 0,02 % Dibutylzinndilaurat, bezogen auf die Summe der Komponenten A und B, versetzt. Nach Erwärmen auf 50°C wird die in Tabelle 2 genannten Mengen an Polyisocyanaten B jeweils so zugetropft, daß die Temperatur nicht über 60°C ansteigt. Diese Temperatur wird solange gehalten, bis der NCO-Gehalt auf kleiner 0,1 % gesunken ist.

Polyester 3 bzw. Vergleichsbeispiel 4 enthält statt eines erfindungsgemäßen cycloaliphatischen Alkohols einen aromatischen Alkohol.

Vergleichsbeispiel 5 entspricht Beispiel 1, enthält jedoch eine nicht erfindungsgemäße Menge an Urethangruppen.

## Tabelle 2 (urethanisierte Polyesterharze)

| Einwaage (%) | Beispiele | | | Vergleichsbeispiele | |
|---|---|---|---|---|---|
| | 1 | 2 | 3 | 4 | 5 |
| **Komponente A** | | | | | |
| Polyester $A_1$ | 77,22 | 86,63 | - | - | 92,55 |
| Polyester $A_2$ | - | - | 77,32 | - | - |
| Polyester $A_3$ | - | - | - | 77,84 | - |
| **Komponente B** | | | | | |
| Polyisocyanat $B_1$ | 22,78 | - | 22,68 | 22,16 | 7,45 |
| Polyisocyanat $B_2$ | - | 13,37 | - | - | - |
| NCO/OH-Äq.-Verh. | 0,54/1 | 0,61/1 | 0,49/1 | 0,56/1 | 0,15/1 |
| Festgehalt (%) | 60 | 60 | 40 | 40 | 60 |
| Viskosität ($23^0$C, mPa.s) | 2000 | 1800 | 200 | 200 | 300 |
| Mol Urethangruppen/ 100 g | 0,062 | 0,070 | 0,062 | 0,061 | 0,02 |

EP 0 424 745 B1

Verwendungsbeispiel 1 bis 3 (erfindungsgemäß) und 4 und 5 (Vergleichsbeispiele)

a) Peroxidische Härtung

Die in Tabelle 3 angegebenen Substanzen wurden gemischt und mit einer Naßfilmstärke von 180 μm jeweils auf eine Glasplatte aufgebracht. Die Trocknung erfolgte bei Raumtemperatur.

Die angegebene Trocknungszeit gibt die Zeit an, bis eine völlig klebfreie Lackfilmoberfläche erzielt ist.

Die Härte (Pendeldämpfung nach König, DIN 53 157) sowie die Acetonbeständigkeit (Werte von 0 = beständig bis 4 = Film aufgelöst) wurden 24 Stunden nach Lackfilmauftrag gemessen.

Wie aus der Tabelle ersichtlich, benötigen die Vergleichsbeispiele 4 und 5 längere Trocknungszeiten.

b) Fotochemische Härtung

Die in Tabelle 4 angegebenen Substanzen wurden gemischt und mit einer Naßfilmstärke von 60 μm auf eine Glasplatte aufgebracht. Die Aushärtung erfolgte nach Abdunsten des Lösungsmittels (5 Min. bei 50°C) unter 2 IST-Strahlern (Impuls-Strahler der Fa. Strahlentechnik Hildebrand, Werner und Pfleiderer, Leistung 80 Watt/cm, Strahlerabstand 20 cm) und 14 m/Min. Verarbeitungsgeschwindigkeit.

Vergleichsbeispiele 4 und 5 besitzen niedrigere Härte.

## Tabelle 3 (Peroxidische Härtung)

| Einwaage (g) | Verwendungsbeispiel | | | Vergleichsbeispiel | |
|---|---|---|---|---|---|
| | 1 | 2 | 3 | 4 | 5 |
| Urethanisiertes Polyesterharz von: | | | | | |
| Beispiel 1 | 40 | | | | |
| Beispiel 2 | | 40 | | | |
| Beispiel 3 | | | 60 | | |
| Vergleichsbeispiel 4 | | | | 60 | |
| Vergleichsbeispiel 5 | | | | | 40 |
| Nitrocellulosewolle E 1440[a] | 19,2 | 19,2 | 19,2 | 19,2 | 19,2 |
| (2,3 %ig in Butylacetat) | | | | | |
| Butylacetat | 25,8 | 25,8 | 5,8 | 5,8 | 25,8 |
| Xylol | 15,0 | 15,0 | 15,0 | 15,0 | 15,0 |
| Vanadiumbeschleuniger VN-2[b] | 0,6 | 0,6 | 0,6 | 0,6 | 0,6 |
| Methylethylketonperoxid | 0,4 | 0,4 | 0,4 | 0,4 | 0,4 |
| Trocknung (Min.) | 90 | 90 | 90 | 210 | 120 |
| Härte (Pendeldämpfung, Sek.) | 122 | 115 | 118 | 111 | 129 |
| Acetonbeständigkeit | 0 | 0 | 0 | 4 | 1 |

[a] Fa. Wolff-Walsrode

[b] Fa. Akzo

EP 0 424 745 B1

## Tabelle 4 (Fotochemische Härtung)

| Einwaage (g) | Verwendungsbeispiel | | | Vergleichsbeispiel | |
|---|---|---|---|---|---|
| | 1 | 2 | 3 | 4 | 5 |
| Urethanisiertes Polyesterharz von: | | | | | |
| Beispiel 1 | 67,0 | | | | |
| Beispiel 2 | | 67,0 | | | |
| Beispiel 3 | | | 100 | | |
| Vergleichsbeispiel 4 | | | | 100 | |
| Vergleichsbeispiel 5 | | | | | 67,0 |
| Butylacetat | 33,0 | 33,0 | – | – | 33,0 |
| Darocur 1173[a] | 0,8 | 0,8 | 0,8 | 0,8 | 0,8 |
| Härte (Pendeldämpfung, Sek.) | 84 | 71 | 84 | 48 | 36 |

[a] 2-Hydroxy-2-methyl-1-phenyl-propan-1-on, Fa. Merck

EP 0 424 745 B1

**Patentansprüche**

1. Verfahren zur Herstellung von olefinisch ungesättigten, Urethangruppen aufweisenden Polyesterharzen durch Umsetzung von

A) olefinisch ungesättigten, alkoholische Hydroxylgruppen aufweisenden Polyesterharzen mit
B) organischen Polyisocyanaten,

dadurch gekennzeichnet, daß man

i) als ungesättigte Polyesterharze A) solche verwendet, die eine Säurezahl von 0 bis 50, eine Hydroxylzahl von 30 bis 120 und ein Molekulargewicht Mn von 800 bis 10 000 aufweisen, und die durch Umsetzung von

a) insgesamt 0,9 x bis 1,0 x Mol Maleinsäure, Maleinsäureanhydrid und/oder Fumarsäure,
b) 0 bis 0,1 x Mol einer Säure- bzw. Säureanhydrid-Komponente, bestehend aus mindestens einer aromatischen Dicarbonsäure mit 8 Kohlenstoffatomen, gesättigten aliphatischen Dicarbonsäuren mit 4 bis 10 Kohlenstoffatomen, gesättigten oder olefinisch ungesättigten cycloaliphatischen Dicarbonsäuren mit 6 bis 10 Kohlenstoffatomen und/oder mindestens einem Anhydrid einer derartigen Dicarbonsäure,
c) 0,1 x bis 0,5 x Mol einer cycloaliphatischen Diolkomponente, bestehend aus mindestens einem zweiwertigen cycloaliphatischen, gesättigten Alkohol mit 6 bis 18 Kohlenstoffatomen,
d) 0,5 bis 0,9 x Mol einer aliphatischen Diolkomponente, bestehend aus mindestens einem zweiwertigen aliphatischen gesättigten Alkohol mit 2 bis 6 Kohlenstoffatomen und
e) 0,1 bis 0,5 x Mol mindestens eines $\beta,\gamma$-ethylenisch ungesättigten Etheralkohols mit 5 bis 14 Kohlenstoffatomen,

hergestellt worden sind, wobei die Summe der Anzahl der Mole der Komponenten a) und b) 1,0 x und die Summe der Anzahl der Mole der Komponenten c), d) und e) 1,1 x bis 1,5 x beträgt und wobei x für eine beliebige positive Zahl steht,

ii) als organische Polyisocyanate Lackpolyisocyanate mit einem Gehalt an (cyclo)aliphatisch gebundenen Isocyanatgruppen von 8 - 30 Gew.-%, ausgewählt aus der Gruppe bestehend aus (i) Isocyanuratgruppen aufweisenden Polyisocyanaten auf Basis von 1,6-Diisocyanatohexan, 1-Isocyanato-3,3,5-trimethyl-5-isocyanatomethyl-cyclohexan oder Gemischen dieser beiden Diisocyanate und (ii) Uretdion- und Isocyanuratgruppen aufweisenden Polyisocyanatgemischen auf Basis von 1,6-Diisocyanatohexan mit einem Molverhältnis von chemisch eingebauten Isocyanuratgruppen zu chemisch eingebauten Uretdiongruppen von 4 : 1 bis 1 : 4 verwendet, und

iii) man die Komponenten A) und B) unter Einhaltung eines NCO/OH-Äquivalentverhältnisses von 0,1:1 bis 1:1 miteinander zur Reaktion bringt, wobei Art und Mengenverhältnisse der Reaktionspartner im Rahmen der gemachten Angaben im übrigen so gewählt werden, daß die resultierenden, urethanisierten Polyesterharze einen Urethangruppengehalt von mindestens 0,025 Mol pro 100 g aufweisen.

2. Gemäß Anspruch 1 erhältlich, olefinisch ungesättigte, Urethangruppen aufweisende Polyesterharze.

3. Verwendung der gemäß Anspruch 1 erhaltenen, olefinisch ungesättigten, urethanisierten Polyesterharze als oder zur Herstellung von unter dem Einfluß von Radikalen aushärtbare(n) Beschichtungsmittel(n).

4. Verwendung gemäß Anspruch 2 in Kombination mit Sikkativen zur Herstellung von mittels Peroxiden aushärtbaren Beschichtungsmitteln.

5. Verwendung gemäß Anspruch 3 in Kombination mit in den Beschichtungsmitteln löslichen, als Sikkative wirkenden Vanadiumverbindungen.

**Claims**

1. A process for the production of olefinically unsaturated polyester resins containing urethane groups by reaction of

A) olefinically unsaturated polyester resins containing alcoholic hydroxyl groups with
B) organic polyisocyanates,

characterized in that

i) the unsaturated polyester resins A) used are those which have an acid value of 0 to 50, a hydroxyl value of 30 to 120 and a molecular weight Mn of 800 to 10,000 and which are obtained by reaction of

a) a total of 0.9x to 1.0x mol maleic acid, maleic anhydride and/or fumaric acid,

b) 0 to 0.1x mol of an acid or anhydride component consisting of at least one aromatic dicarboxylic acid containing 8 carbon atoms, saturated aliphatic dicarboxylic acids containing 4 to 10 carbon atoms, saturated or olefinically unsaturated cycloaliphatic dicarboxylic acids containing 6 to 10 carbon atoms and/or at least one anhydride of such a dicarboxylic acid,

c) 0.1x to 0.5x mol of a cycloaliphatic diol component consisting of at least one dihydric, cycloaliphatic, saturated alcohol containing 6 to 18 carbon atoms,

d) 0.5 to 0.9x mol of an aliphatic diol component consisting of at least one dihydric, aliphatic, saturated alcohol containing 2 to 6 carbon atoms and

e) 0.1 to 0.5x mol of at least one β,γ-ethylenically unsaturated ether alcohols containing 5 to 14 carbon atoms,

the sum of the number of mols of components a) and b) being 1.0x and the sum of the number of mols of components c), d) and e) being from 1.1x to 1.5x, where x is a positive number,

ii) the organic polyisocyanates used are lacquer polyisocyanates containing 8 to 30% by weight (cyclo)aliphatically bound isocyanate groups selected from the group consisting of (i) isocyanurate-modified polyisocyanates based on 1,6-diisocyanatohexane, 1-isocyanato-3,3,5-trimethyl-5-isocyanatomethyl cyclohexane or mixtures of these two diisocyanates and (ii) uretdione- and isocyanurate-modified polyisocyanate mixtures based on 1,6-diisocyanatohexane with a molar ratio of chemically incorporated isocyanurate groups to chemically incorporated uretdione groups of 4:1 to 1:4, and

iii) components A) and B) are reacted with one another in an NCO:OH equivalent ratio of 0.1:1 to 1:1, the type of and quantitative ratios between the reactants being selected within the limits of the foregoing observations in such a way that the resulting urethanized polyester resins have a urethane group content of at least 0.025 mol per 100 g.

2. Olefinically unsaturated polyester resins containing urethane groups obtainable by the process claimed in claim 1.

3. The use of the olefinically unsaturated, urethanized polyester resins obtained by the process claimed in claim 1 as, or for the production of, coating composition(s) curable under the effect of radicals.

4. The use claimed in claim 2 in combination with siccatives for the production of coating compositions curable by peroxides.

5. The use claimed in claim 3 in combination with vanadium compounds soluble in the coating compositions and acting as siccatives.


**Revendications**

1. Procédé pour la préparation de résines de polyester à insaturation oléfinique présentant des groupes uréthanne, par mise en réaction

A) de résines de polyester à insaturation oléfinique présentant des groupes hydroxyle alcooliques avec

B) des polyisocyanates organiques,

caractérisé en ce qu'on utilise,

i) comme résines de polyester insaturées A) celles qui présentent un indice d'acide de 0 à 50, un indice hydroxyle de 30 à 120 et un poids moléculaire Mn de 800 à 10.000, et qui ont été préparées par mise en réaction de

a) au total, de 0,9 x mole à 1,0 x mole d'acide maléique, d'anhydride maléique et/ou d'acide fumarique,

b) de 0 à 0,1 x mole d'un composant d'acide ou d'anhydride constitué par au moins un acide dicarboxylique aromatique contenant 8 atomes de carbone, des acides dicarboxyliques aliphatiques saturés contenant de 4 à 10 atomes de carbone, des acides dicarboxyliques cycloaliphatiques saturés ou à insaturation oléfinique contenant de 6 à 10 atomes de carbone et/ou par au moins un anhydride d'un des acides dicarboxyliques de ce type,

c) de 0,1 x mole à 0,5 x mole d'un composant de diol cycloaliphatique constitué d'au moins un alcool cycloaliphatique bivalent saturé contenant de 6 à 18 atomes de carbone,

d) de 0,5 à 0,9 x mole d'un composant de diol aliphatique constitué d'au moins un alcool bivalent saturé aliphatique contenant de 2 à 6 atomes de carbone, et

e) de 0,1 à 0,5 x mole d'au moins un éther-alcool à insaturation éthylénique β,γ contenant de 5 à 14 atomes de carbone,

la somme du nombre des moles des composants a) et b) étant égale à 1,0 x et la somme du nombre des moles des composants c), d) et e) s'élevant de 1,1 x à 1,5 x, x représentant n'importe quel nombre positif,

ii) comme polyisocyanates organiques, des polyisocyanates pour laques, pour vernis ou pour peintures ayant une teneur de 8 à 30% en poids en groupes isocyanate liés à des radicaux (cyclo)aliphatiques, choisis parmi le groupe constitué par (i) des polyisocyanates présentant des groupes isocyanurate à base du 1,6-diisocyanatohexane, du 1-isocyanato-3,3,5-triméthyl-5-isocyanatométhylcyclohexane ou de mélanges de ces deux diisocyanates, et (ii) de mélanges de polyisocyanates présentant des groupes uretdione et isocyanurate à base du 1,6-diisocyanatohexane avec un rapport molaire entre les groupes isocyanurate incorporés par voie chimique et les groupes uretdione incorporés par voie chimique de 4:1 à 1:4, et

iii) on amène à réagir les composants A) et B) l'un avec l'autre tout en maintenant un rapport d'équivalent NCO/OH de 0,1:1 à 1:1, le type et les proportions des mélanges réactionnels dans le cadre des indications fournies étant sélectionnés en outre de telle sorte que les résines de polyester uréthanisées résultantes présentent une teneur en groupes uréthanne d'au moins 0,025 mole par 100 g.

2. Résines de polyester à insaturation oléfinique présentant des groupes uréthanne, que l'on obtient conformément à la revendication 1.

3. Utilisation des résines de polyester uréthanisées à insaturation oléfinique obtenues conformément à la revendication 1, comme agent(s) d'enduction durcissable(s) sous l'influence de radicaux ou pour la préparation de ces derniers.

4. Utilisation selon la revendication 2, en combinaison avec des siccatifs pour la préparation d'agents d'enduction durcissables au moyen de peroxydes.

5. Utilisation selon la revendication 3, en combinaison avec des composés de vanadium à activité siccative solubles dans les agents d'enduction.